Europäisches Patentamt

European Patent Office

Office européen des brevets

(19)

(11) Publication number: **0 043 210**

**A2**

(12) **EUROPEAN PATENT APPLICATION**

(21) Application number: **81302749.7**

(22) Date of filing: **18.06.81**

(51) Int. Cl.³: **B 62 J 11/00**

(30) Priority: **25.06.80 JP 89766/80 U**

(43) Date of publication of application:
**06.01.82 Bulletin 82/1**

(84) Designated Contracting States:
**BE DE FR GB IT**

(71) Applicant: **SHIMANO INDUSTRIAL COMPANY LIMITED**
**77, 3-cho Oimatsu-cho Sakai-shi**
**Osaka(JP)**

(72) Inventor: **Shimano, Keizo**
**81, 3-cho Midorigaoka-Minamimachi**
**Sakai-shi Osaka(JP)**

(74) Representative: **Szczuka, Jan Tymoteusz et al,**
**Cruikshank & Fairweather 19 Royal Exchange Square**
**Glasgow G1 3AE Scotland(GB)**

(54) **Bottle mounting for cycle.**

(57) This invention relates to a bottle mounting for use in mounting a beverage bottle (2) on a cycle frame (11) which mounting comprises: a support means (4) for detachably engaging said bottle (2) to support said bottle (2); and a fixing means (3,7) for securing said support means (4) to a cycle frame member (11). Known mounting systems give rise to turbulence and increased drag during riding of the cycle.

According to this invention the mounting includes a pair of skirt means (5) disposed on said fixing means (3,7) so as to substantially cover recesses or gaps extending on either side of said mounting between the frame member (11) and the bottle (2).

FIG.3

## BOTTLE MOUNTING FOR CYCLE

This invention relates to a bottle mounting for use in mounting a beverage bottle on a cycle frame which mounting comprises a support means formed and arranged for detachably engaging said bottle to securely support said bottle; and a fixing means for securing said support means in use of the mounting to a cycle frame member.

Known water bottles are usually cylindrical in shape and are mounted on a cylindrical frame member of the cycle in a cage of some sort. With such an arrangement however various gaps and recesses are formed between the water bottle and the frame giving rise to increased air resistance during running of the cycle. Thus, during running of the cycle, air flows passing from the front of the frame member rearwardly along both sides thereof, enter the gaps and recesses causing eddies, and increase the overall air resistance of the cycle during running thereof. This air resistance increases in proportion to the running speed of the bicycle so as to create a particularly acute problem at high speeds and lead to increased rider fatigue.

It is an object of the present invention to avoid or minimize one or more of the abovementioned disadvantages.

The present invention provides a bottle mounting for use in mounting a beverage bottle on a cycle frame which mounting comprises: a support means formed and arranged for detachably engaging said bottle to securely support said bottle; and a fixing means for securing said support means, in use of the mounting, to a cycle frame member
characterized in that
said mounting includes a pair of skirt means disposed on said fixing means so as to substantially cover recesses or gaps extending on either side of said mounting between respective zones occupied, in use of the mounting, by respective ones of said frame member and the bottle.

Preferably each of said skirt means comprises an elongate plate disposed so as to extend longitudinally of said frame member, in use of said mounting, the leading ends of said plates being interconnected by a leading end connecting wall. Desirably the wall means is formed integrally with the fixing means.

With a bottle mounting of the present invention the skirt means covering the aforesaid recesses or gaps form external surfaces extending across respective sides of the frame member and water bottle to provide a substantially smooth air flow rearwards of the cycle during running thereof and substantially avoid the formation of eddies such as are generated in conventional cycle water bottle mounting systems.

Further preferred features and advantages of the invention will appear from the following description given by way of example of some preferred embodiments illustrated with reference to the accompanying drawings, wherein:

Fig. 1 is a partially cut-away perspective view of a first bottle fixing of the invention;

Fig. 2 is a side view showing a water bottle mounted on a cycle frame with the aid of the fixing of Fig. 1;

Fig. 3 is a partially longitudinally sectioned view corresponding to the side view of Fig. 2;

Fig. 4 is a transverse section taken on the line II-II in Fig. 2;

Fig. 5 is a partially cutaway detail perspective view of a second bottle fixing of the invention;

Fig. 6 is a corresponding perspective view showing the principal part of a third fixing of the invention;

Fig. 7 is a sectional view corresponding to Fig. 3, showing a modified form of fixing; and

Fig. 8 is a transverse section taken on the line VIII-VIII in Fig. 7.

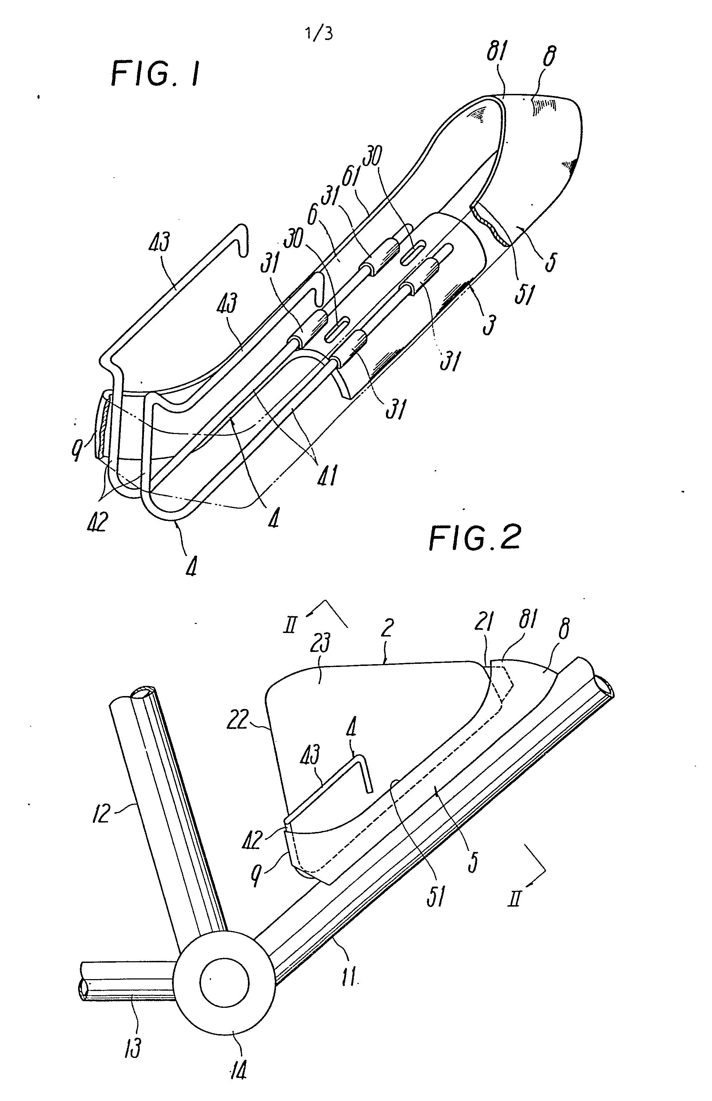

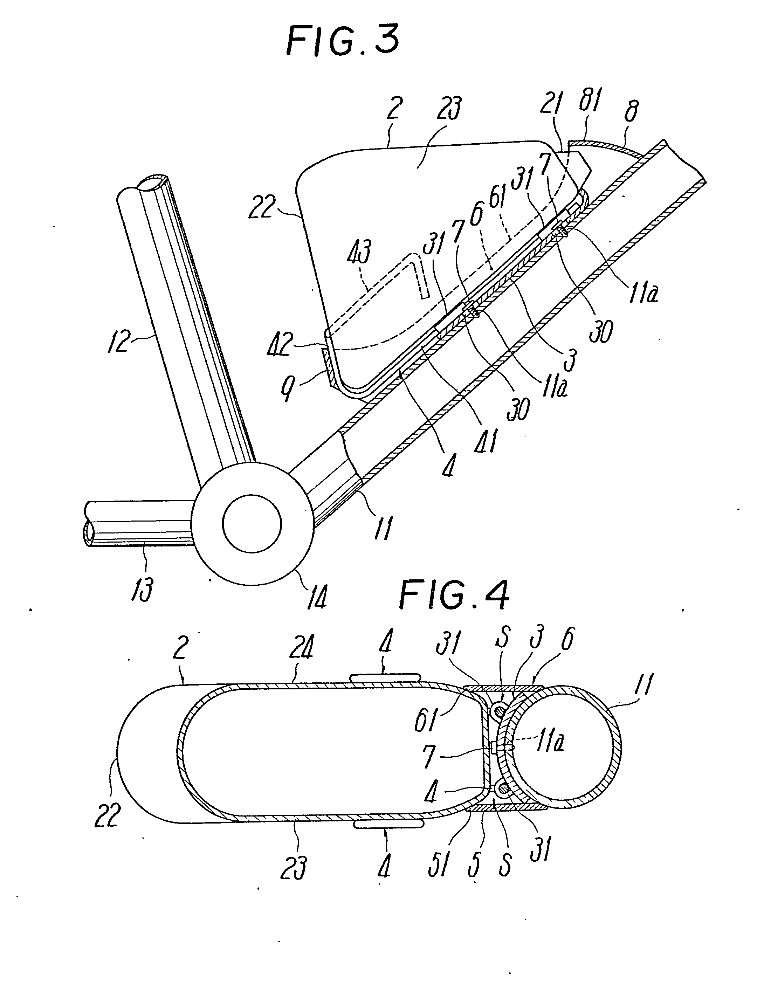

Figs.1 to 4 show a first bottle mounting of the invention detachably supported to the cycle frame member which in this case is the down tube 11. Also shown are a seat tube 12 and a chain stay 13, the down tube and seat tube 11 and 12 and chain stay 13 being interconnected at a bottom bracket 14. A bottle 2 is mounted on the down tube 11 and is substantially triangular in side elevation and has an opening (not shown) at its top and a cap 21 for said opening. The water bottle 2, as shown in Fig. 4, has a substantially flattened form having a thickness laterally of the cycle substantially less than its width in the plane of the bicycle frame. The water bottle could if desired have other shapes (as viewed in side elevation), for example, it could be trapezoidal, square of lozenge-shaped. In general those shapes are preferred wherein the vertical extent of the bottle, when mounted on the cycle frame, is minimized as this helps to still further reduce air resistance.

The water bottle 2 preferably has a thickness corresponding approximately to the external diameter of the frame member 11 on which it is mounted.

The mounting of the invention, as shown in Fig. 1, comprises a fixing means 3 secured to the down tube 11 (or other frame member) and a support means 4 detachably engaging and supporting the water bottle 2, and a pair of skirt means 5 and 6 covering recesses and/or gaps S which extend between the down tube 11 and the water bottle 2 supported on the support means 4.

The fixing means 3 is in the form of, for example, an elongate metallic plate which is part- cylindrical with a radius of curvature approximately equal to that of the outer surface of the down tube 11 and is provided along its central longitudinal axis with two elongate slots 30 extending therealong and at both sides of each said slot 30 with generally tubular portions 31 which are conveniently punched out of the fixing means plate 3 and receive therethrough respective parts of the support means 4 so as to secure said support means to said fixing means. The fixing means 3 is secured to the down tube 11 by means of headed screw bolts 7 which extend through the elongate slots 30 to screw threadedly engage respective threaded bores 11a provided in said down tube 11.

The support means 4 is generally most conveninetly in the form of metallic wire formed into a suitable shape (usually referred to as a 'cage'). In Figs. 1 to 4, the support means comprises a pair of support members 4 each having a straight portion 41 extending along the down tube 11, an upwardly cranked portion 42 extending upwardly from the trailing end of said straight portion 41, and an engagement portion 43 engageable in use with a respective side of the water bottle 2, said engagement portion 43 being cranked first laterally outwardly from the upper end of the upwardly cranked portion 42 and then forwardly, generally parallel to said straight portion 4 and finally downwardly at its leading end. The free ends of the straight portions 41 are threaded through the tubular portions 31 to secure the support members 4 to the fixing means 3.

The forwardly extending portions of the engagement portions 43 of the support members 4 are spaced at an interval slightly smaller than the thickness of the water bottle 2. The water bottle 2, as shown in Figs. 2 and 3, contacts with its bottom wall 22, the upwardly cranked portions 42 and engages with its side walls 23 and 24 the engagement portions 43, to be resiliently gripped by the support members 4 whilst also being supported by the skirt means 5 and 6 as will be further described hereinbelow. In use a rider pulls out the bottle 2 to disengage it from the engagement portions 43 and can squeeze the side walls 23 and 24 of the bottle 2 to pump out of its opening a beverage contained in said bottle and then drink it.

Each of the skirt means 5 and 6 comprises a substantially plate-form member of a given predetermined length disposed alongside the down tube 11. Conveniently the skirt means are made of a synthetic resin or other plastics material. If the fixing means 3 is made from a metallic plate, the respective skirt means 5 and 6 are in this case formed separately from the fixing means 3 and attached thereto through welding, fitting or with the aid of screws.

Also, as shown in Fig. 4, each of the skirt means 5 and 6 contacts a respective side wall of the water bottle 2 mounted on the down tube 11, to cover recesses or gaps formed between the water bottle 2 and the down tube 11 to interconnect the side wall surfaces of the down tube 11 and the water bottle 2, to form a more or less contiguous external surface therewith such that during riding of the bicycle a substantially smooth air flow proceeds from the leading side of the down tube 11 rearwardly along the side wall surfaces of both the down tube 11 and the water bottle 2 substantially avoiding the generation of air eddy currents and minimizing overall air resistance against the cycle's running.

The skirt means 5 and 6 shown in Figs. 1 to 4 are interconnected at their leading ends with a first, leading end, connecting wall 8 and at their trailing ends by a second, trailing end, connecting wall 9 to form a single closed, generally trapezoidal , element. The upper edges of the skirt means are shaped to provide receiving seats 51 and 61 (as shown in Fig. 4) for engaging and supporting respective side walls 23 and 24 of the water bottle 2.

The generally trapezoidal skirts 5 and 6 with their interconnecting end walls 8 and 9 can close recesses or gaps S formed between the down tube 11 and the water bottle 2, thereby reducing air resistance during running of the cycle.

In the above described construction, it is preferable for the first, leading end, connecting wall 8 to be arcuate and generally convex, and most preferably to have an upwardly turned portion projecting above the skirt means to form a 'spoiler' 81 covering the bottle cap 21 at the leading side as shown in Figs. 2 and 3.

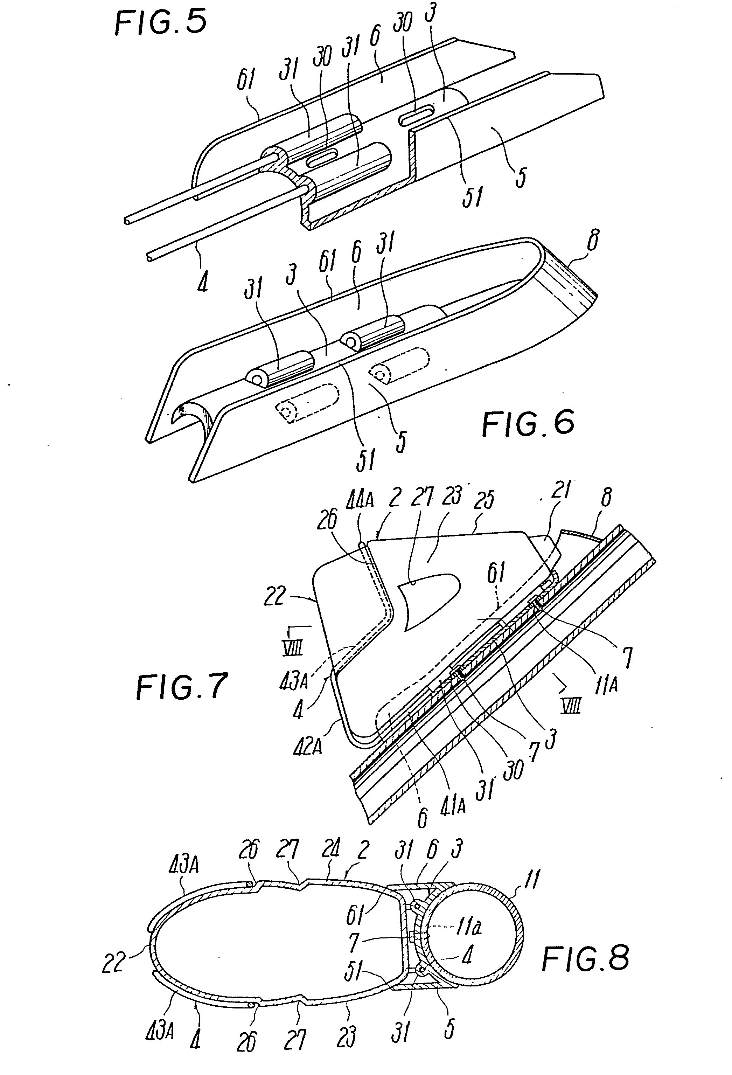

It will be appreciated that various modifications may be made to the above described construction without departing from the scope of the present invention. In particular the fixing means 3 and the skirt means 5 and 6, may as shown in Figs. 5 and 6 be of unitary construction being, for example, integrally moulded of synthetic resin or other plastics material. Also, as shown in Fig. 5, the skirt means 5 and 6 may be formed separately from each other and open at their leading and trailing ends (in the absence of any interconnecting walls), whilst still being formed integrally with the fixing means 3. In the embodiment shown in Fig. 6, the skirt means 5 and 6 are interconnected only at their leading ends by a leading end connecting wall 8. Also the fixing means 3 could include a socket (not shown) for nesting the water bottle 2.

An alternative form of support means 4 is shown in Figs. 7 and 8 and comprises: a pair of straight portions 41A extending alongside the down tube 11; a pair of upwardly cranked portions 42A rising from the trailing ends of said straight portions 41A; a pair of engagement portions 43A which arc slightly outwardly from the upper ends of the upwardly cranked portions 42A, extend forwardly, and are then cranked upwardly again at their free ends. The engagement portions 43A engage the respective side walls 23 and 24 of the water bottle 2. The leading ends of the engagement portions 43A are interconnected by a connecting portion 44A which resiliently engages the upper wall 25 of the water bottle to securely grip the water bottle 2 pressing it against the receiving seats 51 and 61 of the skirt means 5 and 6. As may be seen in Figs. 7 and 8, the water bottle 2 is, in this case, provided with recessed portions 26 on its side walls 23 and 24 and its upper wall 25 which portions 26 are shaped to receive the engagement portions 43A and connecting portion 44A of the support means 4. The side walls of the bottle 2 are also provided with finger grip recesses 27 which facilitate secure holding and squeezing of the bottle 21 to dispense a beverage therefrom. Naturally other forms and shapes of support means for use with the above-described bottle shapes or other suitable bottle shapes may also be employed if desired.

## CLAIMS

1.   A bottle mounting for use in mounting a beverage bottle (2) on a cycle frame (11) which mounting comprises: a support means (4) formed and arranged for detachably engaging said bottle (2) to securely support said bottle (2);  and a fixing means (3,7) for securing said support means (4), in use of the mounting, to a cycle frame member (11)

characterized in that

said mounting includes a pair of skirt means (5) disposed on said fixing means (3,7) so as to substantially cover recesses or gaps extending on either side of said mounting between respective zones occupied, in use of the mounting, by respective ones of said frame member (11) and the bottle (2).

2.   A bottle mounting according to Claim 1 wherein each of said skirt means (5) comprises an elongate plate disposed so as to extend longitudinally of said frame member (11), in use of said mounting, the leading ends of said plates being interconnected by a leading end connecting wall (8).

3.   A bottle mounting according to Claim 2, wherein the trailing ends of said plates are interconnected by a trailing end connecting wall (9).

4.   A bottle mounting as claimed in Claim 2 or Claim 3 wherein the front end connecting wall (8) is convex.

5.   A bottle mounting according to any one of Claims 2 to 4 wherein said front end connecting wall (8) includes a cap covering portion (81) for covering a cap of a said bottle (2) in use of said mounting.

6.   A bottle mounting according to any one of Claims 1 to 5 wherein each of said skirt means (5) is formed for contacting a respective side wall of a said bottle (2), in use of the mounting, so as to form a generally contiguous surface with said side wall.

7. A bottle mounting according to any one of Claims 1 to 6 wherein said wall means (5) is formed integrally with said fixing means (3).

FIG. 1

FIG.2

# FIG.3

# FIG.4

FIG.5

FIG.6

FIG.7

FIG.8